# EUROPÄISCHE PATENTSCHRIFT

(11) **EP 1 701 291 B1**
(45) Veröffentlichungstag und Bekanntmachung des Hinweises auf die Patenterteilung: **27.07.2011**
(21) Anmeldenummer: 06004943.4
(22) Anmeldetag: 10.03.2006
(51) Int. Cl.: G06T 7/20, G06K 9/20

(54) **Verfahren und Vorrichtung zum Beobachten und Auswerten des Verhaltens von Personen**
Method and device for observing and evaluating the behaviour of persons
Procédé et dispositif destinés à l'observation et l'évaluation du comportement de personnes

(30) Priorität: 10.03.2005 DE 102005011523
(43) Veröffentlichungstag der Anmeldung: 13.09.2006
(73) Patentinhaber: gdp Marktanalysen GmbH, 22081 Hamburg (DE)
(72) Erfinder: Steckner, Clemens, 22085 Hamburg (DE)
(74) Vertreter: Glawe, Delfs, Moll

(56) Entgegenhaltungen:
- US-A1- 2002 141 637
- US-A1- 2003 231 787

## Beschreibung

Die Erfindung betrifft ein Verfahren zum Beobachten und Auswerten des Verhaltens von Personen im Bereich von mit Gegenständen bestückten Regalen. Die Erfindung betrifft auch eine Vorrichtung zur Durchführung des Verfahrens.

In vielen Fällen ist es von großem Interesse, genauere Kenntnisse über das Verhalten von Personen im Bereich von mit Gegenständen bestückten Regalen zu erhalten. Beispiele solcher mit Gegenständen bestückter Regale sind z. B. Werkzeuglager, Ersatzteillager, Bücherregale, insbesondere auch Regale in Selbstbedienungsläden. Die Organisation, die das Regal besitzt, betreibt oder bestückt, oder der Hersteller der Ware oder andere Interessenten, die zum Beispiel die Ware bewerben, möchten häufig wissen, wie das Regal genutzt wird. Bei einem Ersatzteillager wäre es z. B. wesentlich, die Anordnung der Ersatzteile so zu treffen, dass die gesuchten Ersatzteile schnell gefunden werden. In Selbstbedienungsläden ist es nicht nur interessant zu wissen, welche Gegenstände wie häufig gekauft werden (was durch die Lagerhaltung festgestellt wird). Vielmehr interessiert auch, welche Stellen im Regal besondere Aufmerksamkeit erregen und zum Kauf anregen, ob Werbemaßnahmen dieses Verhalten in für den Betreiber günstiger Weise verändern können, ob es Unterschiede der Attraktivität bestimmter Regalbereiche in Abhängigkeit von der Tageszeit oder dem Wochentag gibt usw.

Diese Dinge können durch sogenannte Interviewer festgestellt werden, die die Kunden beobachten und möglicherweise auch mit diesen Kunden sprechen. Einerseits besteht dabei aber der Nachteil, dass das Kaufverhalten durch die Anwesenheit des Interviewers beeinflusst werden könnte und so ein falsches Bild über die Attraktivität unterschiedlicher Regalbereiche oder Produkte und Werbemaßnahmen erhalten werden könnte. Insbesondere ist es aber natürlich sehr kostenaufwendig, einen Interviewer für vielleicht eine Woche zu beschäftigen, insbesondere, wenn in dem entsprechenden Regalbereich nur verhältnismäßig selten Gegenstände entnommen werden.

Es ist bekannt, dass mit einer Videokamera laufend Aufnahmen von Gegenständen gemacht werden. Wird mit der Kamera ein Ereignis, nämlich der Durchgang einer Person festgestellt, so werden die Bilder vor und nach dem Durchgang verglichen, um festzustellen, ob aus dem beobachteten Bereich Gegenstände weggenommen oder hinzugefügt worden sind (US 2002/0141637 A1). Erkenntnisse über das Verhalten der Personen, die sich durchbewegt haben, werden dabei nur insoweit gewonnen, dass festgestellt wird, dass hinterher Gegenstände weggenommen oder hinzugefügt sind.

Die Erfindung geht von diesem Stand der Technik aus.

Die Aufgabe der Erfindung besteht in der Schaffung eines Verfahren und einer Vorrichtung der eingangs genannten Art, mit dem die Informationen über das Verhalten der Personen im Bereich der Regale kostengünstig und effizient erhalten werden können.

Die erfindungsgemäße Lösung besteht in einem Verfahren zum Beobachten und Auswerten des Verhaltens von Personen im Bereich mit Gegenständen bestückten Regalen mit einer Kamera gemäß Anspruch 1.

Das erfindungsgemäße Verfahren kommt ohne die oben erwähnten Interviewer aus, indem die Regale mit Videokameras oder anderen Kameras überwacht werden. Die Auswertung kann dann zu einem späteren Zeitpunkt durchgeführt werden, wobei die auswertende Person z. B. Zeiträume überspringen kann, in denen keine Aktivitäten stattgefunden haben. Sie kann die entsprechenden Abschnitte des Videobandes z. B. mit höherer Geschwindigkeit abspielen, bis wieder eine Veränderung festgestellt wird.

Es werden also bei der Ausführungsform der Erfindung aufeinander folgend Aufnahmen des Regals oder eines Teils desselben gemacht. Hält sich dort keine Person auf, so sind die Aufnahmen unverändert. Bewegt sich aber eine Person in das Bildfeld der Kamera, so wird eine Änderung festgestellt. Es wird zwar anfänglich die Person mit dem Regal aufgenommen, was allerdings mit einer geringeren Auflösung getan werden kann, als wenn man genau das Regal abbilden will. Es werden dann von diesem Bild des Regals mit der vorstehenden Person die Bildbereiche "abgezogen" die bereits in der Hintergrundaufnahme erhalten waren. Es wird also nur der Teil des Bildes verarbeitet, der die Person betrifft. Diese Person wird aber, was auch aus Datenschutzgründen unzulässig ist, nicht etwa abgebildet und ihr Bild gespeichert. Vielmehr wird der Bereich des Bildes, der von der Person eingenommen wird, ein- oder mehrfarbig markiert und als Bild vor einem neutralen Hintergrund gespeichert. Dieses Bild, insbesondere wenn es mit gröberer Auflösung aufgenommen ist, lässt keine Rückschlüsse auf die individuelle Person zu, es ermöglicht aber die Feststellung, dass sich eine Person zu einem gewissen Zeitpunkt vor dem Regal befunden hat. Die so aufgenommenen einfarbigen Bilder der Konturen der Personen werden dann ausgewertet, was auch bei manueller Auswertung weniger Zeit benötigt als dauernde Beobachtung, da nur Information während der Zeiträume verarbeitet werden muss, während der sich Personen vor dem Regal aufgehalten haben.

Es werden aber erfindungsgemäß nicht nur die Personen aufgezeichnet, sondern auch der Hintergrund. Haben sich beim Durchgang der Personen Änderungen im Hintergrund ergeben, wurde also etwas aus einem Regal entnommen, so werden die entsprechenden Bildbereiche, in denen sich etwas geändert hat, ebenfalls ein- oder mehrfarbig markiert und als Bilder vor einem neutralen Hintergrund gespeichert. Die Bilder mit den unterschiedlichen Bildbereichen des Hintergrunds werden kombiniert mit den Personenbildern gespeichert und ausgewertet, um so Aussagen über das Verhalten der Personen zu machen, die sich vor dem Regal vorbeibewegen.

Es sind zwar Verfahren bekannt, bei denen durch Sensoren die Anwesenheit von Personen detektiert wird. Bei der Vorrichtung der DE 101 17 939 wird durch einen Bewegungsmelder eine Kamera und ein Alarm ausgelöst. Dies dient dazu, Fotografien des Eindringlings zu erstellen. Sonstige Aufzeichnungen über das Verhalten des Eingedrungenen werden aber nicht gemacht. Die Detektion findet auch nicht aufgrund des sich ändernden Bildes, sondern durch einen Bewegungsmelder statt.

Bei der Vorrichtung der US 2001/0024513 A1 soll ebenfalls nur ein Eindringling festgestellt werden. Dies geschieht, indem die Veränderung des Bildes durch eine Person festgestellt wird, wobei aber Hintergrundbewegungen herausgefiltert werden. Außer der Detektion des Eindringlings ist aber keine weitere Verarbeitung beabsichtigt, insbesondere nicht eine Prüfung, ob diese Person Gegenstände entfernt hat.

Zum besseren Verständnis sollen noch einzelne Begriffe und Vorgänge des erfindungsgemäßen Verfahrens näher erläutert werden.
a) "Aufeinander folgend" bedeutet, dass nicht nur einzelne Aufnahmen gemacht werden. Es versteht sich, dass die Aufnahmen mit einer Frequenz aufgenommen werden müssen, die im Wesentlichen der Änderungsfrequenz entspricht. Wenn sich eine Person in 5 Sek. über den Bildbereich bewegt, so wird der Fachmann je nach Auflösungswünschen in diesem Zeitraum z. B. 5 bis 10 Aufnahmen machen, um so den Bewegungslauf verfolgen zu können.
b) Ohne Durchgang von Personen ändern sich die Bildbereiche nicht, es ist also vor dem Durchgang einer Person eine gewisse Anzahl von identischen Bildern aufgenommen worden. Mit welchen dieser Bilder der Vergleich vorgenommen werden soll, spielt dabei keine Rolle.
c) Die Einzelheiten der Datenverarbeitung, aufgrund derer verschiedene Gegenstände oder Vorgänge unterschieden werden können, brauchen hier nicht erläutert zu werden, da sie dem Fachmann bekannt sind. Bewegt sich eine Person durch das Bildfeld, so wächst zunächst die Zahl der sich verändernden Pixel an, bis sie eine gewisse Anzahl erreicht hat, die sich im Wesentlichen nicht mehr ändert, aber über das Bild wandert. Anschließend verringert sich die Anzahl der Pixel wieder, wenn die Person aus dem Bildfeld heraustritt.
   Dies ist mit Hilfe geeigneter Programme ohne Weiteres festzustellen. Sind diese "wandernden Pixel" verschwunden, so hat sich die Person aus dem Bildfeld herausbewegt, die Kamera kann durch Vergleich mit dem letzten Bild vor dem Hineintreten der Person festgestellt werden, welche Bereiche des Hintergrunds sich verändert haben.
d) Eine größere Anzahl von Bildpunkten ergibt Bildbereiche. Für die Auswertung stehen dem Fachmann verschiedene Möglichkeiten zur Verfügung. Er kann z. B. aufzeichnen lassen, wie viele Personen sich durch das Bildfeld bewegt haben, zur welchen Zeiten dies geschehen ist, bei welchen Durchgängen sich der Hintergrund geändert hat, also Gegenstände entnommen worden sind, usw.

Es ist also eine automatische Verarbeitung der Information möglich, obwohl auch eine manuelle Verarbeitung möglich ist.

Bei einer besonders vorteilhaften Ausführungsform werden die Personenbilder in einer Weise zu einer grafischen Darstellung überlagert, dass Bildpunkte entsprechender Häufigkeit, mit der sie in den Bildern markiert waren, unterschiedliche Farben haben. Man erhält also sozusagen eine "Wärmekarte", bei der häufigere Anwesenheit von Personen an einer bestimmten Stelle vor dem Regal z.B. rot dargestellt werden können, was einer höheren "Temperatur" (Frequenz) entspricht, während andere Bereiche, an denen sich die Personen weniger lang aufgehalten haben, z.B. gelb, grün oder blau dargestellt werden. Auf diese Weise ist feststellbar, wo sich Personen bevorzugt vor einem Regal aufhalten.

Zweckmäßigerweise ist der neutrale Hintergrund schwarz, da so ein besonders deutlicher Kontrast zum einfarbigen Silhouettenbild der Person geschaffen wird, das z. B. rot sein könnte.

Die verhältnismäßig niedrige Auflösung ist für die Abbildung der Personen ausreichend und aus Datenschutzgründen auch erwünscht. Die Hintergrundbilder können aber mit größerer Auflösung aufgenommen werden, wobei selbstverständlich auch die Bilder mit Personen zunächst mit größerer Auflösung aufgenommen werden können, anschließend aber mit einer verringerten Zahl von Bildpunkten gespeichert werden. Dies hat nicht nur datenschutzrechtliche Vorteile, sondern benötigt auch weniger Speicherplatz.

Der Zeitpunkt, wann Aufnahmen gemacht werden sollen, wenn sich also Personen vor dem Regal befinden, kann z. B. durch Bewegungsmelder festgestellt werden, durch die dann Aufnahmen ausgelöst werden.

Eine andere Möglichkeit besteht darin, in regelmäßigen Abständen von z. B. einer Sekunde Aufnahmen zu machen. Insbesondere wird man dabei dann aber nur die Aufnahmen und Personenbilder speichern, die relevant sind. Ändert sich von einer Aufnahme zur anderen der Hintergrund des Regals nicht, braucht nur eine dieser Aufnahmen gespeichert zu werden.

Mittels dieses Verfahrens kann festgestellt werden, wo sich Personen bevorzugt länger aufhalten.

Werden nach Detektion einer Person Aufnahmen des Hintergrunds, die vor und nach dem Durchgang der Person gemacht worden sind, verglichen, so kann festgestellt werden, welche Waren oder Gegenstände die entsprechende Person entnommen hat. Es können wie bei den Personenaufnahmen auch in den Hintergrundaufnahmen Bildbereiche ein- oder mehrfarbig markiert und als Bilder vor einem neutralen Hintergrund gespeichert werden, bei denen sich Änderungen ergeben haben, also Gegenstände entnommen worden sind.

Die entsprechende Information, d. h. die Bilder mit den unterschiedlichen Bildbereichen des Hintergrunds werden dann vorteilhafterweise korreliert mit den Personenbildern gespeichert und ausgewertet. Auf diese Weise kann festgestellt werden, wann und welche Person eine bestimmte Ware entnommen hat. Es kann zwar nicht die Identität der Person festgestellt werden. Es kann aber bestimmt werden, wie lange die Person sich vor dem Regalteil aufgehalten hat, von welcher Seite die Person gekommen ist und nach welcher Seite sie sich wegbewegt hat, oder zu welcher Tageszeit oder an welchem Wochentag die entsprechende Ware entnommen wurde. Dies wird durch unterschiedliche Speicherung der Daten ermöglicht.

Soll ein größeres Regal oder sollen mehrere Regale überwacht werden, so werden zweckmäßigerweise mehrere in Abständen vor dem Regal angeordnete Kameras verwendet. Damit ist es auch zum Beispiel möglich, zu verfolgen, wie sich eine bestimmte Person am Regal vorbeibewegt und unter Umständen an gewissen Stellen länger verweilt.

Sobald festgestellt werde, dass sich die Aufnahmen'ändern, dass also eine Person sich vor dem Regal bewegt, kann einerseits die Aufnahmefrequenz erhöht werden, um eine Videosequenz der Bewegungen der Person vor dem Regal aufzuzeichnen. Es kann zum Beispiel von einer Aufnahme pro Sekunde zu zehn oder zwanzig Aufnahmen pro Sekunde übergegangen werden. Eine solche Videosequenz kann aber auch aus den Aufnahmen erzeugt werden, die in den regelmäßigen Abständen von z. B. einer Sekunde aufgezeichnet worden sind. Dabei können dann wiederum nur die Aufnahmen in die Videosequenzen übernommen werden, bei denen sich Personen vor dem Regal befunden haben.

Zweckmäßiger Weise werden die aufgenommenen Bilder nach einer vorgegebenen Zeit an eine Auswertungszentrale übertragen. Insbesondere kann vorgesehen werden, dass die Bilder mit einem Mobiltelefon aufgenommen und durch dasselbe an eine Auswertungszentrale übertragen werden. Eine Übertragung von Signalen oder Meldungen kann aber auch vorgenommen werden, sobald durch Änderungen in den Aufnahmen festgestellt wird, dass sich eine Person vor dem Regal bewegt. Diese Meldung kann zu einer Person oder einem Gerät erfolgen, um z. B. einen Interviewer zum Regal zu rufen, der die Person beraten oder befragen kann. Auch andere Wirkungen, die durch die Meldung ausgelöst werden, sind denkbar. Zum Beispiel könnte ein Werbespot oder eine Ansage ausgelöst werden war, die sich auf die Artikel bezieht, vor denen die Person gerade steht.

Mithilfe des erfindungsgemäßen Verfahren können auch gewisse Aktionen eingeleitet werden, wenn Durchgang einer Person durch das Bildfeld und/oder Entnahme eines Gegenstands aus dem Regal detektiert wird, z.B. Werbung, Senden von Mitteilungen, Alarm, insbesondere bei Entnahme von bestimmten Artikeln.

Das erfindungsgemäße Verfahren kann in etwas abgewandelter Form auch zur Messung von Wartezeit und der Länge von Warteschlangen mit einer Kamera verwendet werden, deren Aufnahmen ausgewertet werden. Solche Wartezeit und Warteschlangen können sich nicht nur bei Regalen ergeben, sondern auch an anderer Stelle, wie z. B. vor Schaltern.

Eine Vorrichtung zur Durchführung des Verfahrens zeichnet sich dadurch aus, dass sie ein Gehäuse, ein darin angeordnetes Mobiltelefon mit einer Kamera und eine Steuerschaltung aufweist, die in der Kamera oder getrennt davon ausgebildet sein kann oder auch als Software implementiert sein kann. Die entsprechende Vorrichtung ist damit autark. Sie braucht nicht mit irgendwelchen Leitungen mit einer Zentrale oder anderen Überwachungseinrichtungen verbunden zu werden. Damit die Vorrichtung längere Zeit, z. B. eine Woche, betrieben werden kann, ist sie zweckmäßigerweise mit zusätzlichen Stromquellen in Form von Batterien oder Akkus versehen. Sie kann auch zusätzliche elektronische Speicherelemente aufweisen, falls der Speicherplatz im Mobiltelefon nicht ausreicht.

Durch die Erfindung werden also folgende Möglichkeiten geschaffen. Es kann automatisch festgestellt werden, wo und wie lange sich Personen vor einem Regal aufhalten und ob sie Gegenstände entnehmen, d. h. in einem Selbstbedienungsladen Packungen kaufen. Es kann bei einer vorteilhaften Ausführungsform festgestellt werden, welche Packungen entnommen bzw. verkauft worden sind. Da die Personenbilder nur mit niedriger Auflösung als Silhouette gespeichert werden, ist der Datenschutz gewahrt. Es kann auch festgestellt werden, welche Gegenstände zu welcher Zeit entnommen bzw. verkauft worden sind. Es ist eine Zählung der Käufer möglich. Es kann bei entsprechender Ausbildung des Verfahrens und der Vorrichtung festgestellt werden, ob sich die Käufer von links nach rechts oder umgekehrt bewegt haben, ob und wo sie in ihrer Bewegung umgekehrt sind, wie viele Käufer sich an einem bestimmten Ort aufhielten und wie lange sie dort verblieben. Es kann weiter festgestellt werden, wie oft Gegenstände entnommen sind und welcher Käufer einen Gegenstand wo gekauft hat. Zur Verdeutlichung der Vorgänge können die Silhouetten auch in Form von Filmen dargeboten werden.

Es kann festgestellt werden, welche Stellen des Regals die attraktivsten sind. In Form von "Wärmekarten", die unterschiedliche Häufigkeiten mit unterschiedlichen Farben zeigen, können Frequenzen und Kaufvorgänge erfasst und dargestellt werden. Es kann festgestellt werden, wie sich die Frequenz/Käufe/Verweildauern über einen Wochentag und/oder die Tage der Woche verteilen. Es kann weiter festgestellt werden, wie sich die nach links oder nach rechts bewegenden Personen über die Woche verteilt bewegen. Es könnte untersucht werden, wo die von links Kommenden oder von rechts Kommenden etwas entnehmen bzw. kaufen. Es könnte festgestellt werden, welcher Anteil der von links Kommenden oder rechts Kommenden ohne eine Entnahme/einen Kauf wieder umkehrt. Es könnte schließlich untersucht werden, wie sich die Personen verhalten, wenn ein gewisser Gegenstand nicht mehr zur Verfügung steht.

Ein wesentlicher Vorteil der Erfindung besteht auch darin, dass einerseits die Überwachung und Aufzeichnung unbemerkt erfolgt, andererseits aber Datenschutz gewährleistet ist und keinerlei Daten über die individuellen Personen, die aufgenommen wurden, gespeichert werden müssen.

Die Erfindung kann insbesondere für folgende Zwecke eingesetzt werden:
- Optimierung der Warenplatzierung (Anordnung der Ware, Such- und Orientierungshilfen usw.)
- Analyse der Wechselwirkung zwischen der Warenplatzierung, Umfeld und Personenverhalten.
Wesentliche Vorteile sind die Folgenden:
- leicht überall aufstellbar
- autonom, keine Unterstützung vor Ort notwendig
- automatisierte Auswertung
- Vollerhebung über einen längeren Zeitraum mit sehr großen Fallzahlen (also nicht nur eine kleine Stichprobe wie bei anderen Verfahren)
- Kostenvorteil

Die Erfindung kann auch für folgende Zwecke und auf folgende Weise ausgeübt werden:
- Speicherung vor Ort im Gerät und/oder direkte Übertragung per Funk/Internet an eine Auswertungszentrale.
   Letzteres erlaubt die kontinuierliche Analyse und Bereitstellung der Daten.
- Auswertung in der Auswertungszentrale oder im Gerät selbst.
- Speicherung bzw. Übertragung der Bilder oder nur der Analysedaten (letzteres erlaubt die Anonymisierung schon im Gerät)
- Die Aufnahme kann von der Seite erfolgen und/oder von oben mit Aufsicht auf die sich bewegenden Personen
- Die Verbindung von mehreren parallelen Aufzeichnungsgeräten erlaubt es, das Personenverhalten an langen Regalen auszuwerten
- Die Verbindung mehrerer Aufzeichnungsgeräte (z.B. von oben in den Zugängen und seitlich mit Blick auf mehrere Regale) erlaubt es, den Kundenlauf und die Zugriffe insgesamt zu analysieren.
- Auswertung des Personenverhaltens in der Schlange vor der Kasse, die Warenentnahme an den Kassenplatzierungen, und die Messung von Schlangenlänge und Wartezeiten
- Verknüpfung mit anderen Daten, z.B. mit Daten, welche Artikel an der Kasse wirklich gekauft wurden
- Verknüpfung mit ,händisch' erhobenen abgeleiteten Informationen (z.B. Alter, Geschlecht). Auf Grund der voranalysierten Daten braucht von jeder Person nur ein einziges Bild zur Klassifizierung vorgelegt werden. Dies eröffnet eine sehr zeitsparende Möglichkeit, Informationen hinzuzufügen, die sich der automatisierten Analyse entziehen.
- Verhaltensweisen, die nicht automatisch erkennbar sind, können im Nachhinein durch einen menschlichen Betrachter kenntlich gemacht werden. Auch hier lässt sich durch die automatisierte Verarbeitung eine arbeitserleichternde Vorauswahl treffen.
- Die Verknüpfung mit z.B. Interviews ist möglich, in dem der Interviewer Uhrzeit und Position der interviewten Person vor dem Regal aufzeichnet. Dies erlaubt die spätere Zuordnung der Interviewdaten.
- Die Auslösung von Aktionen, wenn eine Person einenware entnimmt (z.B. Mitteilung, Werbung, Alarm)
- Die Übertragung von ausgewählten Bildern oder Statistiken über Funk/Internet, um die Geräte vor Ort und den Fortgang der Untersuchung zu kontrollieren.

Kernpunkte der Erfindung sind:
- Verbindung von aufgenommenem Personenverhalten und den von ihr vorgenommenen Veränderungen an einer Warenplatzierung
- Messung von
   ○ Frequenz (Anzahl der Personen am Regal)
   ○ Verweilzeit (Zeit, die Personen vorm Regal zubringen)
   ○Information (Wie oft, wie lange, wann und wo hat die Person sich am Regal informiert)
   ○ Zugriff (Wie oft, wann und an welcher Stelle die Person in das Regal gegriffen hat und dort Veränderungen hervorgerufen hat)
   ○ Zugriffszeit (Wie viel Zeit benötigen die Personen insgesamt am Regal pro Zugriff)
   ○ Konversionsrate (Wie viele der am Regal angetroffenen Personen informieren sich, wie viele greifen wo zu)
   ○ Suchzeit (Zeit, die die Person bis zum Zugriff gebraucht hat, bzw. Zeiten ganz ohne Zugriff)
   ○ ,Stöber'-Zeit (Zeit, die die Person nach dem Zugriff noch am Regal verbracht hat)
- Analyse von anderen Aspekten wie
   ○ Laufrichtung
   ○ Umkehrpunkte
   ○ Eindringtiefe in den Regalgang
   ○ Konfusionsanzeichen wie häufige Richtungswechsel, längere Zeit ohne Zugriff
   ○ Bücken und Strecken
   ○ Abstand vom Regal
   ○ Interaktion mit dem Einkaufswagen
   ○ Attribute der Personen (z.B. Körpergröße)
   ○ Gruppenverhalten
   ○ Fast oder ganz ausverkaufte Ware
- Automatisierte Analyse
   ○ Analyse auf sich bewegende Personen und Aufzeichnung von Ort und Zeit der Personen
   ○ Verbindung von unterschiedlichen Aufnahmen derselben Person
   ○ Darüber dann auch die Verbindung von mehreren Aufzeichnungsgeräten
   ○ Analyse auf Veränderungen im Hintergrund, die auf Zugriffe hinweisen
   ○ Zuordnung der Zugriffe zu der Person, die zeitlich und räumlich dem Zugriff am nächsten war
   ○ Datenbank mit Information:
      ■ wann welche Person sich an welcher Position befunden hat
      ■ wann sie wo zugegriffen hat
      ■ die Daten sind auf dieser Ebene vollkommen a-nonymisiert und können unter Wahrung von Persönlichkeitsrechten mit anderen Daten (z.B. Interviews) verknüpft werden
   - Auswertung in Form von Statistiken:
      ○ Wärmekarten, die unterschiedliche Parameter, wie z.B. Zugriffe oder Verweilzeit darstellen
      ○ Korrelation von Verhaltensdaten mit Daten zur Platzierung
      ○ Analyse bezogen auf Facings, Artikel, Marken, Hersteller, Warengruppen usw.
      ○ Sämtliche statistische Analysen

Die Erfindung wird im Folgenden anhand einer vorteilhaften Ausführungsform unter Bezugnahme auf die beigefügten Zeichnungen beschrieben. Es zeigen:
- Fig. 1: eine schematische Darstellung des erfindungsgemäßen Verfahrens; und
- Fig. 2: nähere Erläuterungen einer vorteilhaften Ausführungsform.

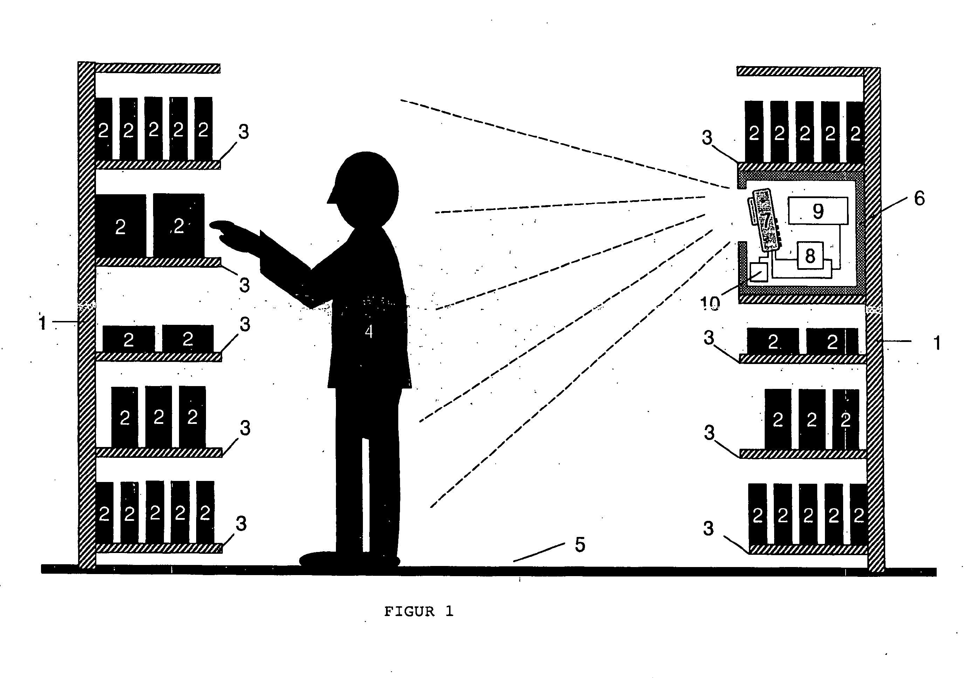

In der Fig.1 ist ein Regal 1 mit Gegenständen 2 gezeigt, die auf unterschiedlichen Borden 3 angeordnet sind. Es kann sich dabei um ein Ersatzteillager, ein anderes Lager, die Regale eines Supermarkts oder dergleichen handeln. Eine Person 4 bewegt sich auf dem Gang 5 vor dem Regal 1 und entnimmt oder entnimmt keinen Gegenstand 2.

Auf der gegenüberliegenden Seite ist im Gehäuse 6 ein Mobiltelefon 7 mit einer elektronischen Kamera installiert, die das Regal 1 und den davor befindlichen Gang 5 in regelmäßigen Abständen aufnimmt. Befindet sich zu einem bestimmten Zeitpunkt eine Person 4 vor dem Regal 1, so wird die Silhouette dieser Person mit geringer Auflösung gespeichert. Die entsprechenden Bilder werden dann mit Hilfe des Mobiltelefons 7 an eine Auswertungszentrale übertragen. Im Gehäuse 6 sind noch eine elektronische Schaltung 8 zur Steuerung des Mobiltelefons 7 sowie ein oder mehrere Akkus 9 vorgesehen, die die Auswerteschaltung 8 und das Mobiltelefon 7 auch über längere Zeiten, insbesondere von ein bis zwei Wochen ohne Unterbrechung mit Strom versorgen. Bei 10 ist eine Speichereinheit gezeigt, die die Speichermöglichkeiten des Mobiltelefons 7 erweitert.

Die Vorrichtung im Gehäuse 6 ist nicht auf externe Strom-oder Signalleitungen angewiesen, kann also überall aufgestellt werden.

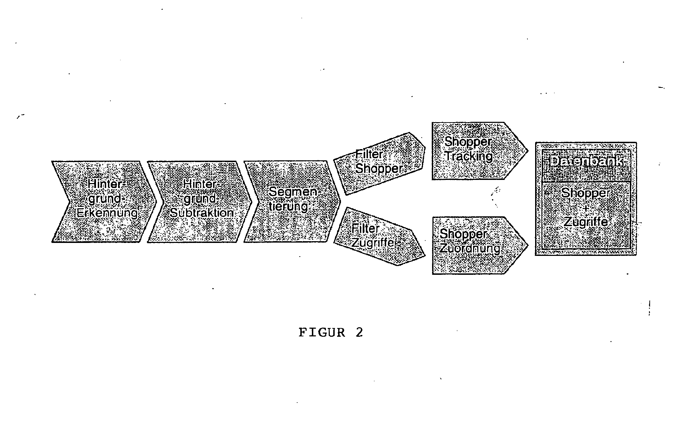

Fig. 2 zeigt eine grafische Darstellung des Ablaufs des Verfahrens.

Während der Aufnahmen wird ein Bild des Hintergrundes in folgender Weise mitgeführt:

Wann immer die aktuellen Bilder über einige Zeit (z.B. 10 sek.) konstant sind bzw. konstante Bildbereiche aufweisen, aktualisieren diese Bilder bzw. Bildbereiche laufend das Hintergrundbild.

Das auf diese Weise laufend aktualisierte Hintergrundbild dient der Erkennung von bewegten Objekten. Dazu werden benachbarte Pixel des aktuellen Bildes, die sich gegenüber dem Hintergrundbild unterscheiden, sukzessive zu größeren

Bildbereichen zusammengefasst. Entspricht die Größe des Bildbereiches der Größe eines Menschen, so wird der entsprechende Bereich als Person interpretiert. Die entsprechenden Bilder gelten als Personenbilder.

In aufeinander folgenden Personenbildern werden die Personenbereiche, die einander am nächsten liegen, als Bilder derselben Person interpretiert, solange der Abstand einen bestimmten Grenzwert nicht überschreitet. Andernfalls wird der Bildbereich als neue Person gezählt. Auf diese Weise ist die Verfolgung der Bewegung einzelner Personen über mehrere Bilder hinweg möglich.

Bilder, auf denen keine Personen erkannt werden, werden als Bilder des Regals interpretiert. Gegebenenfalls wird jetzt ein weiteres Bild vom Regal mit höherer Auflösung aufgenommen. Anschließend wird die Differenz zum letzten Regalbild davor gebildet. Dann werden benachbarte differierende Pixel sukzessive zu größeren Bereichen zusammengefasst und als Veränderung im Regal (typischerweise eine Packungsentnahme) interpretiert. Außerdem wird diese Packungsentnahme der Person zugeordnet, deren Personenbereich auf dem letzten zurückliegenden Personenbild den geringsten Abstand zur Regalveränderung aufweist.

Insgesamt ergibt sich eine Datenbank mit der Beschreibung der Bewegungen aller Personen vor dem Regal, sowie für jede Person, ob bzw. wann und wo sie Veränderungen am Regal vorgenommen hat. Über zusätzliche Angaben zur Lokalisierung der Ware im Regal ergebt sich detaillierte Verknüpfung von Verhalten der einkaufenden Personen und der von ihr eingekauften Ware.

## Patentansprüche

1. Verfahren zum Beobachten und Auswerten des Verhaltens von Personen im Bereich von mit Gegenständen bestückten Regalen mit einer Kamera, deren Aufnahmen ausgewertet werden, wobei
- aufeinander folgend Aufnahmen des Regals oder eines Teils desselben und davor sich möglicherweise aufhaltender Personen gemacht werden,
- die Aufnahmen des Hintergrunds, die vor und nach dem Durchgang von Personen gemacht worden sind, verglichen werden,
- in den Hintergrundaufnahmen Bildbereiche einoder mehrfarbig markiert und als Bilder vor einem neutralen Hintergrund gespeichert werden, bei denen sich Änderungen ergeben haben, und
- die Bilder mit den unterschiedlichen Bildbereichen des Hintergrunds korreliert mit den Personenbildern gespeichert und ausgewertet werden,
**dadurch gekennzeichnet, dass**
- Bildbereiche der Aufnahmen, die sich gegenüber einer vorherigen Aufnahme ohne Personen verändert haben, ein- oder mehrfarbig markiert und als Personenbilder vor einem neutralen Hintergrund gespeichert werden,
- die Personenbilder in Abhängigkeit davon, ob sich die Hintergrundbilder nach dem Durchgang der Person geändert haben oder nicht, unterschiedlich gespeichert werden, und
- dass die Personenbilder in der Weise ausgewertet werden, dass sie zu einer graphischen Darstellung überlagert werden, in der die Bildpunkte entsprechend der Häufigkeit, mit der sie in den Bildern markiert waren, unterschiedliche Farben haben.

2. Verfahren nach Anspruch 1, **dadurch gekennzeichnet, dass** der neutrale Hintergrund schwarz ist.

3. Verfahren nach einem der Ansprüche 1 oder 2, **dadurch gekennzeichnet, dass** die Personenbilder mit niedrigerer Auflösung als die Aufnahmen gespeichert werden.

4. Verfahren nach einem der Ansprüche 1 bis 3, **dadurch gekennzeichnet, dass** durch Bewegungsmelder die Anwesenheit von Personen festgestellt und Aufnahmen ausgelöst werden.

5. Verfahren nach einem der Ansprüche 1 bis 3, **dadurch gekennzeichnet, dass** in regelmäßigen Abständen Aufnahmen gemacht werden.

6. Verfahren nach einem der Ansprüche 1 bis 5, **dadurch gekennzeichnet, dass** die Personenbilder in Abhängigkeit davon, wie lange sich die Person vor der überwachten Stelle des Regals aufgehalten hat, unterschiedlich gespeichert werden.

7. Verfahren nach einem der Ansprüche 1 bis 6, **dadurch gekennzeichnet, dass** die Personenbilder in Abhängigkeit davon ein, von welcher Seite die Person gekommen ist und nach welcher Seite sie sich wegbewegt hat, unterschiedlich gespeichert werden.

8. Verfahren nach einem der Ansprüche 1 bis 7, **dadurch gekennzeichnet, dass** die Personenbilder unter Berücksichtigung der Tageszeit und/oder des Wochentags ausgewertet werden.

9. Verfahren nach einem der Ansprüche 1 bis 8, **dadurch gekennzeichnet, dass** mehrere in Abständen vor dem Regal angeordnete Kameras verwendet werden.

10. Verfahren nach einem der Ansprüche 1 bis 9, **dadurch gekennzeichnet, dass** die aufgenommenen Bilder nach einer vorgegebenen Zeit an eine Auswertungszentrale übertragen werden.

11. Verfahren nach einem der Ansprüche 1 bis 10, **dadurch gekennzeichnet, dass** die Bilder mit einem Mobiltelefon aufgenommen und an eine Auswertungszentrale übertragen werden.

12. Verfahren nach einem der Ansprüche 1 bis 11, **dadurch gekennzeichnet, dass** die Personenbilder in Form von Videosequenzen als Silhouetten aufgenommen und/oder dargestellt werden.

13. Verfahren nach einem der Ansprüche 1 bis 12, **dadurch gekennzeichnet, dass** bei Detektion eines Personendurchgangs oder einer Warenentnahme bestimmte Aktionen (Werbung, Senden von Mitteilungen, Alarm) usw. ausgelöst werden.

14. Verfahren einem der Ansprüche 1 bis 13, **dadurch gekennzeichnet, dass** ein Signal oder eine Meldung an eine Person oder ein Gerät abgegeben wird, sobald eine Änderung der Aufnahmen und damit die Anwesenheit einer Person festgestellt wird.

15. Vorrichtung zur Durchführung des Verfahrens nach einem der Ansprüche 1 bis 14, **dadurch gekennzeichnet, dass** sie ein Gehäuse (6), ein darin angeordnetes Mobiltelefon (7) mit einer Kamera und eine Steuerschaltung (8) aufweist.

## Claims

1. Method for observing and evaluating the behaviour of persons in the region of shelves stocked with items, this being done with the aid of a camera whose pictures are evaluated,
- pictures of the shelf or a part of the same and of persons possibly stationed therebefore being taken sequentially,
- the pictures of the background which were taken before and after the passage of the persons being compared,
- image regions in the background pictures in the case of which changes have occurred being marked with one or more colours and being stored as images against a neutral background, and
- the images with the different image regions of the background being stored in a fashion correlated with the personal images and evaluated
**characterized**
- **in that** image regions of the pictures which have changed by comparison with a previous picture without persons are marked with one or more colours and stored as personal images against a neutral background,
- the personal images are stored differently depending on whether the background images have or have not changed after the passage of the person, and
- **in that** the personal images are evaluated in such a way that they are superimposed to form a graphic representation in which the pixels have different colours in accordance with the frequency with which they have been marked in the images.

2. Method according to Claim 1, **characterized in that** the neutral background is black.

3. Method according to either of Claims 1 and 2, **characterized in that** the personal images with a relatively low resolution are stored as the pictures.

4. Method according to one of Claims 1 to 3, **characterized in that** motion detectors determine the presence of persons and trigger pictures.

5. Method according to one of Claims 1 to 3, **characterized in that** pictures are taken at regular intervals.

6. Method according to one of Claims 1 to 5, **characterized in that** the personal images are stored differently depending on how long the person has been stationed in front of the monitored location of the shelf.

7. Method according to one of Claims 1 to 6, **characterized in that** the personal images are stored differently depending on from which side someone has come and to which side they have moved away.

8. Method according to one of Claims 1 to 7, **characterized in that** the personal images are evaluated taking account of the time of day and/or the day of the week.

9. Method according to one of Claims 1 to 8, **characterized in that** use is made of a plurality of cameras arranged at spacings in front of the shelf.

10. Method according to one of Claims 1 to 9, **characterized in that** the recorded images are transmitted after a prescribed time to an evaluation centre.

11. Method according to one of Claims 1 to 10, **characterized in that** the images are recorded with a mobile telephone and are transmitted to an evaluation centre.

12. Method according to one of Claims 1 to 11, **characterized in that** the personal images are recorded and/or displayed as silhouettes in the form of video sequences.

13. Method according to one of Claims 1 to 12, **characterized in that** specific actions (advertising, transmission of messages, alarm) etc. are initiated upon detection of the passage of a person or removal of goods.

14. Method according to one of Claims 1 to 13, **characterized in that** a signal or a report is output to a person or a device as soon as a change in the pictures, and thus the presence of a person, are determined.

15. Device for carrying out the method according to one of Claims 1 to 14, **characterized in that** it has a housing (6), a mobile telephone (7), arranged therein, with a camera, and a control circuit (8).

## Revendications

1. Procédé pour l'observation et l'analyse du comportement des personnes dans une zone avec des rayonnages contenant des objets, au moyen d'une caméra dont les enregistrements sont analysés, dans lequel procédé
- sont effectués des enregistrements successifs du rayonnage ou d'une partie de celui-ci et des personnes s'arrêtant éventuellement devant ledit rayonnage,
- sont comparés les enregistrements de l'arrière-plan qui ont été effectués avant et après le passage des personnes,
- des zones d'image dans les enregistrements d'arrière-plan, dans lesquelles se sont produits des changements, sont marquées en une ou plusieurs couleurs et sont stockées en tant qu'images devant un arrière-plan neutre, et
- les images avec les différentes zones d'image de l'arrière-plan, mises en corrélation avec des images de personnes, sont stockées et analysées,
**caractérisé en ce que**
- des zones d'image des enregistrements, qui ont subi des changements par rapport à un enregistrement précédent ne contenant pas de personnes, sont marquées en une ou plusieurs couleurs et sont stockées en tant qu'images de personnes devant un arrière-plan neutre,
- les images de personnes sont stockées différemment selon que les images d'arrière-plan ont subi ou non des changements après le passage de la personne, et
- **en ce que** les images de personnes sont analysées de telle sorte qu'elles sont superposées pour obtenir une représentation graphique, sur laquelle les points de l'image ont des couleurs différentes conformément à la fréquence à laquelle ils ont été marqués dans les images.

2. Procédé selon la revendication 1, **caractérisé en ce que** l'arrière-plan neutre est noir.

3. Procédé selon la revendication 1 ou 2, **caractérisé en ce que** les images de personnes sont stockées avec une résolution inférieure à celle des enregistrements.

4. Procédé selon l'une quelconque des revendications 1 à 3, **caractérisé en ce que** des capteurs de mouvement sont prévus pour détecter la présence des personnes et déclencher les enregistrements.

5. Procédé selon l'une quelconque des revendications 1 à 3, **caractérisé en ce que** les enregistrements sont effectués à des intervalles réguliers.

6. Procédé selon l'une quelconque des revendications 1 à 5, **caractérisé en ce que** les images de personnes sont stockées différemment en fonction de la durée pendant laquelle la personne s'arrête devant la zone surveillée du rayonnage.

7. Procédé selon l'une quelconque des revendications 1 à 6, **caractérisé en ce que** les images de personnes sont stockées différemment en fonction du côté à partir duquel la personne est venue et du côté vers lequel elle s'est déplacée.

8. Procédé selon l'une quelconque des revendications 1 à 7, **caractérisé en ce que** les images de personnes sont analysées en tenant compte de l'heure et/ou du jour de la semaine.

9. Procédé selon l'une quelconque des revendications 1 à 8, **caractérisé en ce que** plusieurs caméras, montées devant le rayonnage, sont utilisées.

10. Procédé selon l'une quelconque des revendications 1 à 9, **caractérisé en ce que** les images enregistrées sont transmises vers une centrale d'analyse après un intervalle de temps prédéfini.

11. Procédé selon l'une quelconque des revendications 1 à 10, **caractérisé en ce que** les images sont enregistrées et transmises au moyen d'un téléphone mobile vers une centrale d'analyse.

12. Procédé selon l'une quelconque des revendications 1 à 11, **caractérisé en ce que** les images de personnes sont enregistrées et/ou représentées en tant que silhouettes sous la forme de séquences vidéo.

13. Procédé selon l'une quelconque des revendications 1 à 12, **caractérisé en ce que**, en cas de détection du passage d'une personne ou du prélèvement d'une marchandise, sont déclenchées des actions déterminées (annonce publicitaire, émission de communiqués, alarme, etc.).

14. Procédé selon l'une quelconque des revendications 1 à 13, **caractérisé en ce qu'**un signal ou un message est envoyé à une personne ou un appareil dès qu'une variation de l'enregistrement et donc de la présence d'une personne est détectée.

15. Dispositif destiné à la mise en oeuvre du procédé selon l'une quelconque des revendications 1 à 14, **caractérisé en ce que** ledit dispositif comporte un carter (6), un téléphone mobile (7) monté dans ce dernier avec une caméra, et un circuit de commande (8).
